# EUROPEAN PATENT APPLICATION

(11) **EP 1 179 918 A2**
(43) Date of publication of application: **13.02.2002**
(21) Application number: 01402019.2
(22) Date of filing: 26.07.2001
(51) Int. Cl.: H04L 12/28, H04L 29/06

(54) **Method and system for transmitting IP traffic in a radiocommunication system**

(30) Priority: 09.08.2000 ES 200002041
(71) Applicant: ALCATEL, 75008 Paris (FR)
(72) Inventor: Contreras Murillo, Luis Miguel, 28017 Madrid (ES)
(74) Representative: Lamoureux, Bernard

(57) **Abstract**

A remote unit (11) receives some IP datagrams associated with an established communication, eliminates from the header of each IP datagram the information that remains inalterable throughout the duration of the communication, and adds to the header of each IP datagram information relative to the air interface employed by a radiocommunication system, in order that the IP datagram so modified be transported over a radio channel to a fixed unit (12).

The fixed unit (12) receives the modified IP datagrams, eliminates from the header of each modified IP datagram the information relative to the air interface, and adds to the header of each IP datagram the information that remains inalterable throughout the duration of the set up communication, and each IP datagram so obtained is sent to a transport network that transports it to the second subscriber.

## Description

### OBJECT OF THE INVENTION

The present invention is related with a method for transmitting IP (Internet Protocol) traffic between subscribers, such that part of the link allocated to two subscribers that have set up a communication is implemented over a radiocommunication system.

The IP traffic transmission method reduces significantly the size of the header of each IP datagram that is sent over a radio channel allocated to the communication in progress, in such a manner that the bandwidth of the radiocommunication system is used more efficiently.

The radiocommunication system implements communications employing techniques such as time division duplex (TDD), time division multiple access (TDMA), frequency division multiple access (FDMA), code division multiple access (CDMA), or similar.

### STATE OF THE ART

There is a continuous day by day growth in the number of subscribers capable of generating, among others, IP traffic. These subscribers frequently are connected on a transport network such as a public switched telephone network (PSTN), Internet network or similar, via a radiocommunication system.

The communication between the different networks is carried out by means of communication protocols, organised as a series of layers or levels, each one overlaid on top of that below. The number of layers and the name, the content and the function of each one, differ from network to network.

Thus, the information of a communication is not transferred directly from a determined layer of a network to the equivalent layer of the other network. Each layer passes control information to the layer that is immediately below it, until the lowest layer or physical medium is reached, over which the real communication takes place. To the list of protocols employed by a certain system the term protocol stack is applied, like the TCP/IP reference model, extensively used within the Internet network.

The TCP/IP protocol stack has four layers, including a network layer (inter-network), the function of which is to deliver packets to any network in order that they are forwarded to their destination. This layer defines a packet and protocol format called IP (Internet Protocol) and from this the IP traffic.

In order to implement the communication end to end, a first transmission control protocol (TCP) is used that is a connection-oriented protocol. The second protocol of this layer, the user datagram protocol (UDP) is a connection-less protocol.

The UDP protocol is extensively employed when multimedia traffic is transmitted over the Internet network, and it imposes real time data delivery requirements since multimedia traffic is fundamentally interactive.

Within the TCP/IP protocol stack, the protocol RTP (real time protocol) is that which serves to incorporate specific timing marks for each packet transmitted. Additionally, it incorporates sequence numbers for detecting losses within a stream.

Various packets can have the same timing mark if they belong to the same data unit at the application level, for example a video frame.

The RTP protocol, transport protocol with delivery in real time, is implemented on the UDP protocol given the characteristics of multimedia traffic.

When a communication is set up, the stream of information is fragmented into data packets, in such a manner that each layer of the TCP/IP protocol stack adds a header to the element received from the layer above, forming a segment. Next, the resulting segment is delivered to the layer below.

This process is repeated until the data reach the physical layer in the form of IP datagrams, being transmitted to the destination over a radio channel of the radiocommunication system.

When IP traffic is being transmitted over the radiocommunication system, an inefficient use of the limited radio resources of the system is made, as much information relative to the TCP/IP protocol stack is transported, and part of it remains inalterable whilst the communication lasts, being included in the header of each one of the IP datagrams sent over the radio channel allocated to the communication set up between two subscribers.

Consequently, there is a need to develop a method for minimising the header of each IP datagram, on the subscriber side, prior to sending it over the radio channel.

And on the network side, the fixed part of the radiocommunication system has to be capable of regenerating the stream of IP traffic generated by the subscriber before said stream is delivered to the transport network, for example, the Internet network.

Clearly, the IP traffic stream delivered to the Internet network by the fixed part of the radiocommunication system is compatible with the TCP/IP protocol stack.

In brief, if the header of the IP datagram contains less information, the bandwidth of the radiocommunication system is employed in a more efficient manner. Consequently, the performance of the system is increased and the limited radio resources thereof are employed efficiently.

### CHARACTERISATION OF THE INVENTION

In order to overcome the problems outlined above, a method for transmitting IP (Internet Protocol) traffic has been proposed, in which part of the link between a first subscriber and a second subscriber is set up over a radiocommunication system.

An object of the invention is to minimise the header of each IP datagram, which form the IP traffic stream, which are transmitted over a radio channel of the radiocommunication system. Consequently, a better use of the bandwidth of the radiocommunication system is achieved.

To achieve said objective a remote unit receives the set of IP datagrams associated with a communication set up between a first subscriber and a second subscriber. Next, said unit removes from the header of each IP datagram the information that remains inalterable throughout the duration of the set up communication, and adds to the header of each IP datagram the information relative to the air interface employed by the radiocommunication system, in order that the IP datagram so modified be transported over the radio channel to a fixed unit.

The fixed unit receives the modified IP datagrams, eliminates from the header of each modified IP datagram the information relative to the air interface, and adds to the header of each IP datagram the information that remains inalterable throughout the duration of the set up communication, and each IP datagram so obtained is sent to a transport network that transports it to the second subscriber.

### BRIEF DESCRIPTION OF THE DRAWINGS

A more detailed explanation of the invention is provided in the following description, based on the attached figures, in which:
- figure 1 shows, in a schematic diagram, a radiocommunication system according to the invention,
- figure 2 shows, in a schematic diagram, a remote unit according to the invention, and
- figure 3 shows, in a schematic, a fixed unit according to the invention.

### DESCRIPTION OF THE INVENTION

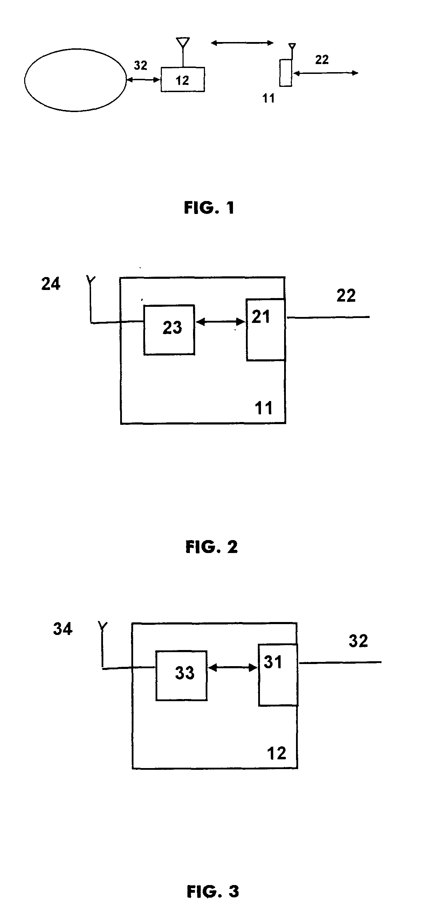

According to figure 1, a first subscriber is connected to an Internet network or similar, via a radiocommunication system. Said subscriber can send and/or receive any type of information independently of its nature (voice, data, images, video or similar) according to the TCP/IP protocol stack, that is, IP traffic.

The first subscriber is connected to a remote unit 11 that communicates by radio with a fixed unit 12, connected to the Internet network. Both, the remote unit 11 and the fixed unit 12 form part of the radiocommunication system.

When the first subscriber wishes to set up a communication with a second subscriber, the first subscriber sends a call set-up request. Once the request has been processed, a link is established between the first subscriber and the second subscriber. A part of the link is established over the radio section of the radiocommunication system.

As a consequence, the radiocommunication system is capable of transporting the IP traffic sent and received by the first subscriber to and from the second subscriber.

In order to perform the transport, the remote unit 11 and the fixed unit 12 have to allocate a radio channel to the communication.

Whilst the communication lasts, certain items of information relative to the communication set up between the first subscriber and the second subscriber are maintained unchanged, such as the originating and destination addresses of the communication, etc.

Then, bearing this fact in mind, it is possible to achieve an improvement in the performance of the communication system, that is, make a better use of the system bandwidth.

To manage this, transmission is avoided over the radio channel of those items of information that are identical, relative to signalling and/or control of the TCP/IP protocol stack, which are situated in the header of each of the IP datagrams associated with the communication set up between the first subscriber and the second subscriber.

As a consequence, in the transmitting direction from the first subscriber to the second subscriber, the remote unit 11 transmits only a part of the content of the header of each IP datagram to the fixed unit 12, and adds to the header that information relative to the air interface of the radiocommunication system, it being necessary to do so in order that the modified IP datagram be received by the fixed unit 12.

Once the fixed unit 12 has received the modified IP datagram, it shall suppress from the header that part relative to the air interface of the radio system, and shall add to it that part of the header which the remote unit 11 suppressed, before transmitting it.

The fixed unit 12 adds the same information to the header of each IP datagram.

As a consequence, the fixed unit 12 shall hand over to the Internet network the IP datagram that was received by the remote unit 11. Next, the Internet network transports each IP datagram to the second subscriber.

In brief, the remote unit 11 suppresses from each IP datagram that information relative to the communication that remains inalterable throughout the duration thereof, adds to the header that information relative to the air interface for the purpose that it be received by the fixed unit 12, which adds to the header the same information as was suppressed by the remote unit 11. Next, the IP datagram is handed over to the Internet network in order that it is transported to its destination.

Then, the radio channel transports less information relative to signalling and control than is contained in the header of the IP datagram and, as a consequence, efficient use of the bandwidth of the radio channel allocated to said communication in course is made.

The information which remains inalterable throughout the duration of a communication is associated with various layers of the TCP/IP protocol stack such as transport layer, network layer, etc.; and this information is stored by the fixed unit 12 for as long as the communication between the first subscriber and the second subscriber lasts.

In relation with figure 2, the remote unit 11 receives, by means of a first reception means 21 an IP traffic stream through an input 22 from the first subscriber. The first reception means 21 is connected to a first transmitter-receiver 23 which, in turn, is connected to a first antenna 24.

The first reception means 21 reads the header of each IP datagram and suppresses the information relative to the TCP/IP protocol stack that remains inalterable.

The information that remains in the header of each IP datagram is related with the RTP protocol, data of the application layer. The payload (information data) of the IP datagram does not undergo any modification.

Next, the first reception means 21 produces a stream of modified IP datagrams, which are received by the first transmitter-receiver 23. The latter adds to the header of each one of them the information relative to the air interface (physical medium employed by the radiocommunication system) for the purpose that each modified IP datagram be transmitted to the fixed unit12, via the first antenna 24.

The information that the first transmitter-receiver 23 adds in the header of each modified IP datagram is relative to the physical layer and to the data link layer of the communications protocol employed by the radiocommunication system, because it concerns the transmission characteristics of the radiocommunication system.

Now, with regard to figure 3, the fixed unit 12 receives the stream of modified IP datagrams by means of a second transmitter-receiver 33 via a second antenna 34.

The second transmitter-receiver 33 is connected to a second reception means 31, in such a manner that it is connected to the Internet network through an output 32.

The second transmitter-receiver 33 suppresses from each modified IP datagram received the information relative to the air interface of the radiocommunication system, and the modified IP datagram is forwarded to the second reception means 31.

Next, the second reception means 31 adds to the header of each IP datagram received the information relative to the TCP/IP protocol stack that remains inalterable, such as information relative to the transport layer (UDP protocol), to the network layer (IP protocol) and to the physical layer. Said information has been received and stored by the second reception means 31, during the communication set-up process.

The second reception means 31 generates at an output an IP traffic stream, equivalent to that received by the remote unit 11, suitable for being transported to the second subscriber over the Internet network (physical medium).

In another embodiment, and with the objective of obtaining a greater improvement in the performance of the radiocommunication system, the subscriber unit 11 carries out a compression of the header of the IP datagram before transmitting it to the fixed unit 12. Clearly, said fixed unit 12 carries out the reverse process of decompression of the header of the IP datagram received.

Similarly, when from the Internet network there is an IP traffic stream to the first subscriber, the fixed unit 12 receives, by means of the second reception means 31, said IP traffic stream.

The second reception means 31 reads the header of each IP datagram and suppresses the information relative to the TCP/IP protocol stack that remains inalterable whilst the communication between the first subscriber and the second subscriber lasts.

Next, the second reception means 31 generates a stream of modified IP datagrams, which are received by the second transmitter-receiver 33. The latter adds to the header of each one of them the information relative to the air interface (physical medium employed by the radiocommunication system) with the objective that each modified IP datagram be transmitted to the remote unit 11, via the second antenna 34.

The remote unit 11 receives the stream of modified IP datagrams by means of the first transmitter-receiver 23 via the first antenna 24.

The first transmitter-receiver 23 suppresses from each modified IP datagram received the information relative to the air interface of the radiocommunication system, and the modified IP datagram is delivered to the first reception means 21.

Next, the first reception means 21 adds to the header of each IP datagram received the information relative to the TCP/IP protocol stack that remains inalterable. Said information has been received and stored by the first reception means 21, during the communication set-up process.

The first reception means 21 generates at an output a IP traffic stream, equivalent to that received by the fixed unit 12, suitable for being transported to the first subscriber over the physical medium.

## Claims

1. **Method for transmitting IP traffic in a radiocommunication system** in which a remote unit (11) receives and transmits information from and to a fixed unit (12) over a radio channel allocated to a communication set up between a first subscriber and a second subscriber, **characterised in that** said method includes the following steps:
a) reception of an IP traffic stream that comprises a set of IP datagrams associated with said set up communication,
b) suppression from the header of each IP datagram of the information that remains inalterable throughout the duration of said set up communication,
c) addition to the header of each IP datagram of the information relative to the air interface employed by said radiocommunication system, in order that the IP datagram so modified be transported by said radiocommunication system, and
d) transmission of each modified IP datagram over said radio channel.

2. **Method for transmitting** according to claim 1, **characterised in that** additionally it comprises the steps of:
e) reception of said modified IP datagrams,
f) suppression from the header of each modified IP datagram of the information relative to the air interface,
g) addition to the header of each IP datagram of the information that remains inalterable throughout the duration of said set up communication, and
h) transmission of each IP datagram so obtained over a link of a transport network to said second subscriber.

3. **System for transmitting IP traffic in a radiocommunication system** in which a remote unit (11) receives and transmits information from and to a fixed unit (12) over a radio channel allocated to a communication set up between a first subscriber and a second subscriber, **characterised in that** said system includes:
a) a first means adapted for receiving said IP traffic stream that comprises a set of IP datagrams associated with said set up communication,
b) a first means adapted for suppressing from the header of each IP datagram the information that remains inalterable throughout the duration of said set up communication,
c) a first means adapted for adding to the header of each IP datagram the information relative to the air interface employed by said radiocommunication system, in order that the IP datagram so modified be transported by said radiocommunication system, and
d) a first means adapted for transmitting each modified IP datagram over said radio channel.

4. **System for transmitting** according to claim 3, **characterised in that** additionally it comprises:
e) a second means adapted for receiving said modified IP datagrams,
f) a second means adapted for suppressing from the header of each modified IP datagram the information relative to the air interface,
g) a second means adapted, for adding to the header of each IP datagram the information that remains inalterable throughout the duration of said set up communication, and
h) a second means adapted for sending each IP datagram so obtained over a link of a transport network to said second subscriber.

5. **Remote unit** (11) according to claim 3, **characterised in that** it comprises a first reception means (21) adapted for receiving said IP traffic stream and also adapted for suppressing from the header of each IP datagram the information that remains inalterable throughout the duration of said set up communication.

6. **Remote unit** (11) according to claim 5, **characterised in that** it comprises also a first transmitter-receiver (23) adapted for adding to the header of each IP datagram received from said first reception means (21) the information relative to the air interface employed by said radiocommunication system and also adapted for transmitting each modified IP datagram over said radio channel, via a first antenna (24).

7. **Fixed unit** (12) according to claim 4, **characterised in that** it comprises a second transmitter-receiver (33) adapted for receiving said modified IP datagrams via a second antenna (34) and also adapted for suppressing from the header of each modified IP datagram the information relative to the air interface.

8. **Fixed unit** (12) according to claim 7, **characterised in that** it comprises also a second reception means (31) adapted for adding to the header of each IP datagram received from said second transmitter-receiver means (33) the information that remains inalterable throughout the duration of said set up communication and also adapted for sending each IP datagram so obtained over a link of a transport network to said second subscriber.
